Europäisches Patentamt

European Patent Office

Office européen des brevets

(19)

(11) Veröffentlichungsnummer: **0 046 253**
**A1**

## (12) EUROPÄISCHE PATENTANMELDUNG

(21) Anmeldenummer: **81106218.1**

(22) Anmeldetag: **08.08.81**

(51) Int. Cl.³: **G 03 B 19/18, G 03 B 1/48**

(30) Priorität: **14.08.80 DE 3030873**

(43) Veröffentlichungstag der Anmeldung: **24.02.82**
**Patentblatt 82/8**

(84) Benannte Vertragsstaaten: **AT CH FR GB LI**

(71) Anmelder: **AGFA-GEVAERT Aktiengesellschaft Camera-Werk, Postfach, D-8000 München 90 (DE)**

(72) Erfinder: **Rehm, Christian, Säbener Strasse 35, D-8000 München 90 (DE)**
Erfinder: **Wilsch, Herbert, Alfred-Lingg-Strasse 2, D-8025 Unterhaching (DE)**
Erfinder: **Zanner, Johann, Albert-Schweitzer-Strasse 1a, D-8025 Unterhaching (DE)**

(54) **Kamera mit einer Vorrichtung zur Aufbelichtung einer Marke auf einen Filmrand.**

(57) Bei einer Kamera mit einer Filmtransportvorrichtung zum schrittweisen Vorbeitransportieren eines einseitig perforierten lichtempfindlichen Films an einem in einer Filmführungsplatine ausgesparten Bildfenster und mit einer Vorrichtung zum Aufbelichten einer Marke auf einen Rand des Films weist gemäß der Erfindung die Filmführungsplatine einen weiteren Durchbruch (20) auf, der in einer Auflagefläche (5a) für den nicht perforierten Filmrand (RN) mündet. Die dem Bildfenster (2/4) zugewandten Seitenwände des Durchbruches (20) sind im Bereich vor der Mündung pyramidenstumpfförmig abgeschrägt, wobei die Mündung den kleinsten Querschnitt des Durchbruches (20) aufweist.

Dadurch werden die Marken scharf begrenzt und Streulicht auf der Bildaufzeichnung vermieden.

CAMERA-WERK MÜNCHEN
PATENTABTEILUNG

14.08.80

CW 2436.2 PP/MP

10-hl-ew

0069C

−2−

## Kamera mit einer Vorrichtung zur Aufbelichtung einer Marke auf einen Filmrand

Die Erfindung betrifft eine Kamera mit einer Filmtransportvorrichtung zum schrittweisen Vorbeitransportieren eines
einseitig perforierten lichtempfindlichen Filmes an einem in
einer Filmführungsplatine ausgesparten Bildfenster und mit
einer Vorrichtung zum Aufbelichten einer Marke auf einen
Rand des Filmes.

Eine solche Kamera ist beispielsweise aus der
DE-OS 27 46 036 bekannt. Die Marken dienen zum Kennzeichnen
von im Stillstand wiederzugebenden Einzelbildern. Die Vorrichtung zum Aufbringen der Marken besteht u.a. aus einer
Belichtungsstation, die in Filmlaufrichtung gesehen nach dem
Bildfenster auf der Perforationsseite des Filmes liegt. Die
Marken sind gegenüber dem zugehörigen Bild auf dem Film vorversetzt.

Wie sich gezeigt hat, müssen bei der Konstruktion einer entsprechenden Kamera unter Berücksichtigung der bei Belichtung
und Wiedergabe auftretenden Probleme verschiedene Aufgaben
gelöst werden.

Eine besondere Schwierigkeit besteht darin, daß die Marke
kleiner sein muß als die verfügbaren preiswerten Lichtquellen. Ferner sollte die aufzubelichtende Marke nicht nur genau positioniert und möglichst groß sein, wobei sie sich auf
keinen Fall in die Bildfläche des benachbarten Bildes erstrecken oder dort durch Streulicht zu Zusatzbelichtungen
führen darf, sondern sie muß auch möglichst scharf begrenzt
sein, um bei der Abtastung steile Impulskanten zu liefern.

Gemäß der Erfindung wird dies dadurch erreicht, daß die
Filmführungsplatine einen weiteren Durchbruch aufweist, der
in einer Auflagefläche für den nicht perforierten Filmrand
mündet und daß die dem Bildfenster zugewandten Seitenwände
des Durchbruches im Bereich vor der Mündung pyramidenstumpfförmig abgeschrägt sind, wobei die Mündung den kleinsten
Querschnitt des Durchbruches aufweist.

Hinter diesem Durchbruch kann eine verhältnismäßig großvolumige Lichtquelle verwendet werden. Dadurch, daß die Öffnung
in einer Filmauflagefläche mündet, wird erreicht, daß die
Marke auf dem Film scharf begrenzt ist. Die Abschrägung in
Richtung auf die kritischen Teile des Filmes hin gibt eine
zusätzliche Sicherheit bezüglich des Überstrahlens, da
selbst, wenn der Film einmal nicht exakt anliegen sollte,
durch die Formgebumg des Durchbruches erreicht wird, daß die
bildseitige Kante der Marke durch den Schlagschatten der
zugeordneten Wand des Durchbruches positioniert wird.

0046253

Vorteilhaft ist es, wenn gemäß einer weiteren Ausbildung des Gegenstandes der Erfindung der Durchbruch auf der dem Film abgewandten Seite der Filmführungsplatine eine zusätzliche Erweiterung zur Aufnahme wenigstens eines Teiles einer Lichtquelle aufweist. Somit können auch von der Form her ungünstige Lichtquellen bei der Montage weitgehend unjustiert verwendet werden.

Weitere Einzelheiten der Erfindung ergeben sich aus der Beschreibung, in der im folgenden anhand der Zeichnung ein Ausführungsbeispiel erörtert wird. Es zeigen

Fig. 1     eine Aufsicht auf erfindungsgemäße Teile einer Schmalfilmkamera,

Fig. 2     einen Schnitt durch die Anordnung nach Fig. 1 gemäß der Schnittlinie II-II.

Fig. 3     eine Aufsicht auf ein erfindungsgemäß markiertes Filmstück.

Fig. 4     eine vergrößerte perspektivische Darstellung eines Ausschnittes aus Figur 1,

Fig. 5     einen Schnitt durch den Gegenstand nsch Fig. 4,

Fig. 6     eine Aufsicht auf den Gegenstand nsch Fig. 4.

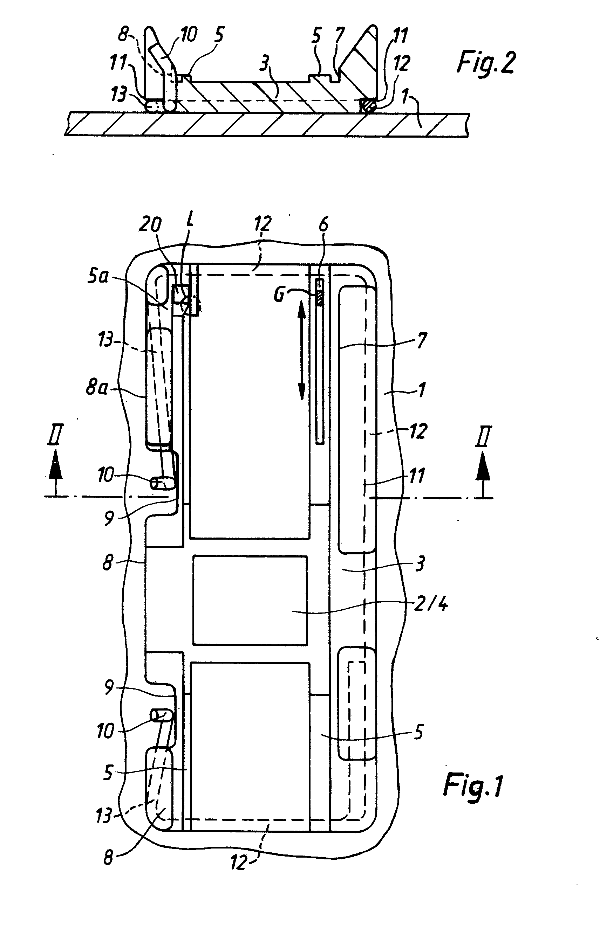

Von einer Schmalfilmkamera ist in den Figuren 1 und 2 die stirnseitige Trägerplatine 1 gezeigt. Sie weist einen Bildfensterausschnitt 2 auf und trägt die Filmbahnplatine 3, die ebenfalls einen Bildfensterausschnitt 4 hat. In Blickrich-

0046253

tung der Figuren 1 und 2 unterhalb der Trägerplatine 1 sind der nicht gezeigte Umlaufverschluß und Greifermechanismus sowie das Kameraobjektiv angeordnet.

Die Filmbahnplatine 3 weist in Filmtransportrichtung zu beiden Seiten des Bildfensterausschnitts 2 vier als Filmauflagefläche dienende Kufen 5 auf, die genau gegenüber dem Objekiv gearbeitet und justiert sind und die eigentliche Filmbahn bilden. Außerdem sind in der Filmbahnplatine 3 und in der Trägerplatte 1 deckungsgleiche Schlitze 6 zum Durchtritt des Filmtransportgreifers G vorgesehen. Der seitlichen Filmführung dienen seitliche Kufen 7, 8 und 8a, wobei die Kufen 8 und 8a auf der einen Längsseite zwei Unterbrechungen 9 aufweisen. Diese Unterbrechnungen 9 dienen dem Eingriff zweier seitlicher Filmandruckfedern 10 und sind im wesentlichen symmetrisch zur Querschnittlinie des Bildfensterausschnitts 2, 4 angeordnet. Durch die seitlichen Filmandruckfedern 10 wird erreicht, daß der nicht gezeigte Film im Bildfenster in Anlage an den seitlichen Kufen 7 gehalten und somit genau ausgerichtet ist, da der Abstand der Kufen 7, 8 aus Gründen eines störungsfreien Filmtransports etwas größer als die Filmbreite sein muß.

Zur Aufnahme von Filmandruckfedern 10 ist in der Filmbahnplatine 3 unterhalb der Filmbahn 5 eine umlaufende Nut 11 vorgesehen, die an der Seite der Unterbrechungen 9 erheblich tiefer ist als an den anderen drei Seiten der Filmbahnplatine 3.

Die Filmandruckfedern 10 werden durch einen Federdraht 12 gebildet, der so gebogen ist, daß er an der die durchgehende Kufe 7 ragenden Längsseite und den beiden Schmalseiten der Filmbahnplatine 3 gerade und straff in der Nut 11 liegt. An der die Unterbrechungen 9 ragenden Seite der Filmbahnplatine 3 liegen in den Unterbrechungen 9 die freien Schenkel 13 des
Federdrahts 12. Die freien Schenkel 13 stehen an den Ecken
der Filmbahnplatine 3 bis an den äußeren Rand der Nut 11 vor
und sind dann abgeschrägt nach innen in die Unterbrechungen
9 hineingebogen und dabei vorgespannt. Die in den Unterbrechungen 9 und damit an der Filmkante anliegenden Enden 10
der Schenkel 13 sind senkrecht zur Filmbahn 5 hochgebogen
und bilden somit die eigentlichen, auf die Filmkante einwirkenden seitlichen Andruckfedern.

Soweit bisher beschrieben, ist die Filmplatine aus
DE-GM 78 19 727 bekannt.

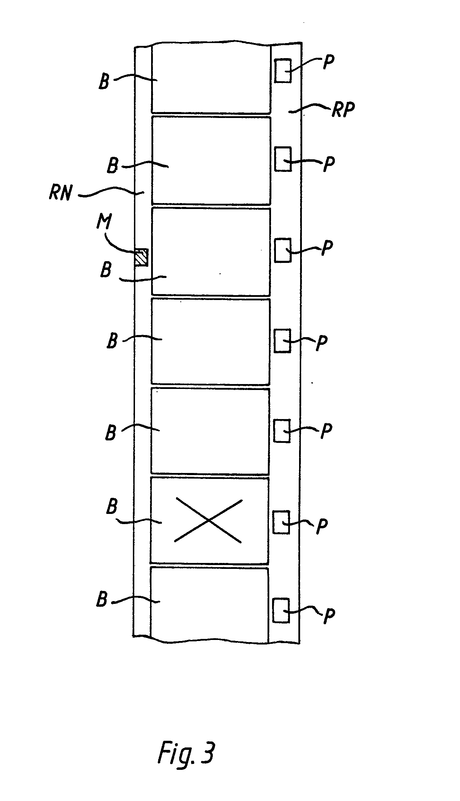

Zur Aufbringung einer Markierung gemäß der Erfindung ist die
Filmauflagekufe 5 im oberen, dem Ende 6 des Bewegungsbereiches des Greifers G gegenüberliegenden Bereich 5a verbreitert und weist eine Öffnung 20 auf, die eine quadratische
filmseitige Austrittsfläche hat. Hinter dieser ist eine
Lichtquelle L angeordnet, die vorzugsweise aus einer Luminiszenzdiode besteht und in einem geeigneten Zeitpunkt während des Filmstillstandes Licht emittiert und somit wegen
der quadratischen Austrittsfläche der Öffnung eine quadratische Marke M auf den Film aufbelichtet, die in Fig. 3 zu
erkennen ist.

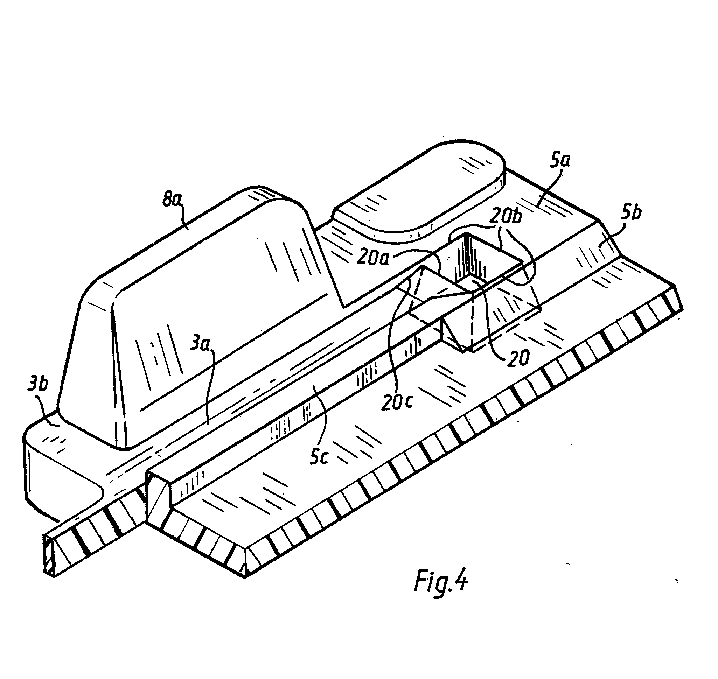

Wie anhand von Figur 4 zu erkennen ist, liegt der zum Filmfenster hinweisende Rand 20a der Öffnung 20 unterhalb des
Niveaus der Filmauflagefläche 5a und geht in eine keilförmig
abfallende Fläche über, die in einen Schmutzkanal 3a mündet
und über die Fläche 3b ins Freie führt. Ferner ist der
Schmutzführungskanal 3a so eng, daß die Filmführungsfläche
5c die gewohnte Normalbreite aufweist.

Wenn der Film auf der Filmauflagefläche 5a, 5c entlangläuft, nimmt er eventuell in der Öffnung 20 sich ansetzende Schmutzpartikel mit und führt sie über den Kanal 3a ins Freie.

Die Verbreiterung der Filmauflagekufe 5 im Bereich 5a wirkt sich auf den Film nicht schädlich aus. Sie bringt aber einen bis auf die Filmauflagefläche reichende Berandung der Öffnung 20 mit sich, wodurch ein Überstrahlen der Belichtungsmarke M in den Bildbereich B hinein verhindert wird. Wegen dieser zuverlässigen Trennung von Marke und Bild kann die Marke, wie in Fig. 3 dargestellt, verhältnismäßig breit sein, was zur Erhöhung der Erkennungssicherheit bei der Wiedergabe vorteilhaft ist.

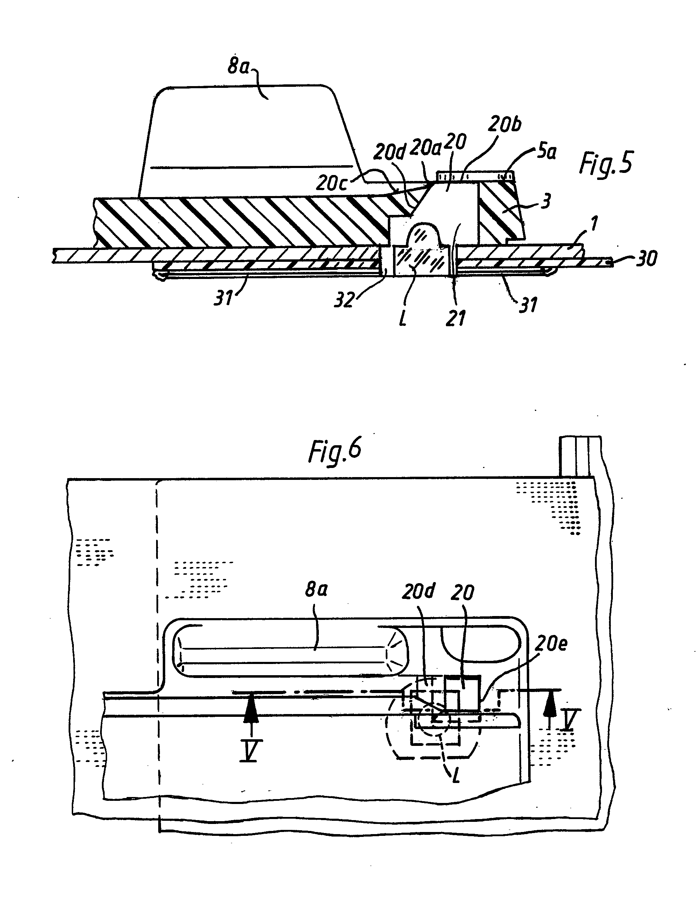

Die Figuren 5 und 6 zeigen einen Schnitt durch bzw. eine Aufsicht auf den in Fig. 4 gezeigten Bereich der Filmführungsplatine. Wie zu sehen ist, mündet der Durchbruch filmseitig in einer quadratischen Öffnung 20 in der Filmauflagefläche 5a. Er weist in Richtung auf das Bildfenster und in Richtung auf die Bildfläche des Filmes zu pyramidenstumpfförmig erweiterte Wandabschnitte 20d und 20e auf. Darunter ist eine zusätzliche Erweiterung 21 des Durchbruches angeordnet, die zur Aufnahme eines Teiles der Lichtquelle L, im Ausführungsbeispiel einer Luminiszenzdiode, dient. Diese ist mit ihren Anschlüssen 31 direkt auf einer Leiterplatte 30 befestigt, die ebenso wie die Trägerpllatine 1 für die Filmführungsplatine 3 einen entsprechend großen Durchbruch 32 für die Lichtquelle aufweist.

Wie anhand der Figuren zu entnehmen ist, kann der Lichtstrom nur filmauswärts aus der Öffnung 20 austreten. Zusätzlich ergibt sich durch die vorliegende Konstruktion eine gute

CW 2436.2 PP/MP - 8 -

Lichtabdichtung gegenüber dem Bildfenster, das in den Figuren 4 bis 5 zwar nicht dargestellt, dessen Lage aber anhand der Figur 1 ersichtlich ist.

Fig. 3 zeigt einen gemäß der Erfindung mit einer Marke M versehenen, einseitig perforierten Film mit einem Perforationsrand RP mit Perforationslöchern P, mit Einzelbildern B und einer Marke M auf dem nichtperforierten Rand RN. Das in der Bildbühne befindliche Bild ist mit einem "X" markiert. Wie an dieser Figur zu erkennen ist, befindet sich die Marke M gegenüber einem Perforationsloch P auf mittlerer Bildhöhe.

CAMERA-WERK MÜNCHEN
PATENTABTEILUNG

14.08.80

10-hl-ew

0069C

CW 2436.2 PP/MP

## Ansprüche

1. Kamera mit einer Filmtransportvorrichtung zum schrittweisen Vorbeitransportieren eines einseitig perforierten lichtempfindlichen Filmes an einem in einer Filmführungsplatine ausgesparten Bildfenster und mit einer
Vorrichtung zum Aufbelichten einer Marke auf einen Rand
des Filmes, dadurch gekennzeichnet, daß die Filmführungsplatine einen weiteren Durchbruch (20) aufweist,
der in einer Auflagefläche (5a) für den nicht perforierten Filmrand (RN) mündet und daß die dem Bildfenster (2/4) zugewandten Seitenwände des Durchbruches
(20) im Bereich vor der Mündung pyramidenstumpfförmig
abgeschrägt sind, wobei die Mündung den kleinsten Querschnitt des Durchbruches (20) aufweist.

2. Kamera nach Anspruch 1, dadurch gekennzeichnet, daß der
Durchbruch auf der dem Film abgewandten Seite der Filmführungsplatine eine zusätzliche Erweiterung zur Aufnahme wenigstens eines Teiles einer Lichtquelle (L)
aufweist.

Hierzu 4 Blatt Zeichnungen

0046253

1/4

Fig.2

Fig.1

Fig.3

Fig.4

Fig.5

Fig.6

Europäisches
Patentamt

EUROPÄISCHER RECHERCHENBERICHT

0046253

Nummer der Anmeldung

EP 81106218.1

| Kategorie | Kennzeichnung des Dokuments mit Angabe, soweit erforderlich, der maßgeblichen Teile | betrifft Anspruch |
|---|---|---|
| | DE - A1 - 2 727 031 (BELL & HOWELL) <br> * Fig. 1-3 * <br> -- | 1 |
| | DE - A - 2 245 199 (BOLEX) <br> * Fig. 1,2; Ansprüche * <br> -- | 1 |
| | DE - A - 2 232 186 (FUJI PHOTO FILM) <br> * Fig. 1,2 * <br> -- | 1 |
| A | DE - A - 2 135 182 (POLAROID) <br> * Fig. 1-4; Seiten 8,9 * <br> -- | 1,2 |
| | US - A - 3 263 555 (SCHEIB) <br> * Fig. 5-7; Ansprüche * <br> -- | 1,2 |
| D | DE - A1 - 2 746 036 (AGFA) <br> * Fig. 1-15 * <br> ---- | 1 |

**EINSCHLÄGIGE DOKUMENTE**

KLASSIFIKATION DER ANMELDUNG (Int. Cl.³)

G 03 B 19/18
G 03 B  1/48

RECHERCHIERTE SACHGEBIETE (Int. Cl.³)

G 03 B 19/00
G 03 B 17/00
G 03 B  1/00
G 03 B 15/00
G 03 D 15/00
G 03 B 21/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 20-11-1981 | KRAL |

EPA form 1503.1   06.78